# EUROPEAN PATENT APPLICATION

(11) **EP 4 696 446 A1**
(43) Date of publication of application: **18.02.2026**
(21) Application number: 25185942.7
(22) Date of filing: 27.06.2025
(51) Int. Cl.: B23K 20/12

(54) **FRICTION STIR WELDING TOOL**

(30) Priority: 26.07.2024 JP 2024121666
(71) Applicant: AISIN CORPORATION, Aichi 448-8650 (JP)
(72) Inventor: NIWA, Kentaro, Kariya 448-8650 (JP); TOKUDA, Yoshinori, Kariya 448-8650 (JP); HASHIMOTO, Toshiki, Kariya 448-8650 (JP)
(74) Representative: TBK

(57) **Abstract**

A friction stir welding tool (1, 1B) that welds welding target materials to each other includes: a shank (2) coaxially connected to a rotating member; a first spiral portion (3) integrally formed with the shank, and having a first spiral surface (30) extending in a spiral shape around an axis (a) extending coaxially with the rotating member so as to approach the axis as being separated from the shank in an axial direction; a second spiral portion (5) integrally formed with the first spiral portion, and having a second spiral surface (50) extending in a spiral shape in a direction opposite to the first spiral surface around the axis so as to be separated from the axis as being separated from the first spiral portion in the axial direction on a side opposite to a shank side; and a heat receiving portion (6) integrally extending from the second spiral portion on a side opposite to a first spiral portion side and configured to receive heat from the second spiral portion.

## Description

### TECHNICAL FIELD

This disclosure relates to a friction stir welding tool for welding welding target materials to each other.

### BACKGROUND DISCUSSION

In the related art, a friction stir welding tool including a stirring probe is known (see, for example, JP 2020-185597A (Reference 1)). In this friction stir welding tool, a spiral pressure receiving surface inclined with respect to a rotation axis of the stirring probe is provided on a side surface of the stirring probe. The pressure receiving surface includes a pressure receiving region perpendicular to a rotation tangential direction in a cross section perpendicular to the rotation axis. When the welding target materials are welded to each other using the friction stir welding tool, the stirring probe is rotated in a rotation direction in which a normal direction of the pressure receiving surface is positive. Accordingly, a plastic flow of the material in the rotation direction can be generated by the pressure receiving surface, and a ratio of the plastic flow of the material in an extending direction of the rotation shaft can be reduced, so that generation of burrs can be prevented. Further, in the friction stir welding tool described in Reference 1, since a so-called shoulder that is pressed against the welding target materials can be omitted, it is possible to prevent an increase in welding width even when a stirring region becomes deep.

In addition, in the related art, there is known a friction stir device including a cylindrical outer holder, a cylindrical inner holder disposed inside the outer holder, a slide shaft inserted into the inner holder, and a bobbin tool as a rotary tool for friction stir welding attached to a tip of the slide shaft (for example, see JP 2013-208654A (Reference 2)). The outer holder is fixed to a chuck portion of the friction stir device and rotationally driven by the friction stir device about a shaft extending in a vertical direction. The inner holder has a long hole penetrating an outer peripheral surface in a radial direction, and is fixed to the outer holder so as to rotate integrally with the outer holder. The slide shaft has a protrusion protruding outward from a side surface, and the protrusion engages with the long hole of the inner holder. Accordingly, the inner holder and the slide shaft are integrally rotatable, and the slide shaft is movable in the vertical direction within a range of the long hole with respect to the inner holder. The bobbin tool is coupled to the slide shaft, and rotates forward and backward around an axis extending in the vertical direction as the slide shaft rotates. The bobbin tool includes a columnar first shoulder, a columnar second shoulder disposed below the first shoulder at an interval, and a pin connecting the first shoulder to the second shoulder. The pin penetrates the second shoulder, and a nut is screwed to the pin at a lower end of the second shoulder. On an outer peripheral surface of the pin, an upper spiral groove is engraved from a lower end of the first shoulder to an intermediate position in a height direction of the pin, and a lower spiral groove opposite to the upper spiral groove is engraved from the intermediate position to an upper end of the second shoulder.

When the pair of welding target materials are welded by the friction stir device, end surfaces of the welding target materials abut on each other, and the pin of the rotating bobbin tool is moved along a butting portion. Accordingly, it is possible to weld the welding target materials together by friction stirring a material around the pin. Further, according to the bobbin tool including the first and second shoulders, since a backing member disposed on a back side of the pair of welding target materials can be omitted, it is possible to prevent complication of a welding operation. Further, in the friction stir device, since the slide shaft is formed to be movable in the inner holder, even if the welding target materials are deformed by frictional heat of the friction stirring, the bobbin tool can be moved in the vertical direction so as to follow positional deviation of end surfaces, and an occurrence of welding defects due to deviation of a welding position can be prevented.

According to the friction stir welding tool described in Reference 1, it is possible to prevent the increase in the welding width, but it is difficult to further improve welding strength since the welding target materials can be welded only from one side. On the other hand, according to the bobbin tool described in Reference 2, the welding target materials can be welded from the front surface side and the back surface side to further improve the welding strength. However, in the bobbin tool described in Reference 2, the pin may expand due to the frictional heat of the friction stirring, and welding defects may occur due to a change in the interval between the first and second shoulders.

A need thus exists for a friction stir welding tool capable of further improving welding strength between welding target materials while preventing an increase in welding width and an occurrence of welding defects.

### SUMMARY

A friction stir welding tool according to the present disclosure is a friction stir welding tool that welds welding target materials to each other, and includes: a shank coaxially connected to a rotating member; a first spiral portion integrally formed with the shank, and having a first spiral surface extending in a spiral shape around an axis extending coaxially with the rotating member so as to approach the axis as being separated from the shank in an axial direction; a second spiral portion integrally formed with the first spiral portion, and having a second spiral surface extending in a spiral shape in a direction opposite to the first spiral surface around the axis so as to be separated from the axis as being separated from the first spiral portion in the axial direction on a side opposite to a shank side; and a heat receiving portion integrally extending from the second spiral portion on a side opposite to a first spiral portion side and configured to receive heat from the second spiral portion.

The friction stir welding tool of the present disclosure is driven to rotate around the axis when the welding target materials are welded, a boundary portion between the first and second spiral portions is moved so as to pass through the pair of welding target materials abutting on each other or overlapping each other and travel in one direction. Accordingly, a surrounding material is frictionally stirred by the rotating first and second spiral portions, and a plasticized region is formed on a rear side in a traveling direction of the first and second spiral portions. In addition, the first and second spiral surfaces are formed so as to approach the axis and extend in opposite directions toward the boundary portion between the first and second spiral portions, and cause a plastic flow of the material in a rotation direction of the friction stir welding tool to reduce a ratio of the plastic flow of the material in an extending direction of the axis. Therefore, it is possible to firmly weld the welding target materials to each other from a front surface side and a back surface side while preventing an increase in welding width and generation of burrs due to the friction stir welding. Further, heat generated in the first and second spiral portions by the friction stirring of the material is transferred to the heat receiving portion from the second spiral portion. Accordingly, the expansion in the vicinity of the boundary portion between the first and second spiral portions due to frictional heat can be prevented, and the occurrence of welding defects due to the fluctuation of the interval between the first spiral surface and the second spiral surface can be favorably prevented. As a result, also according to the friction stir welding tool of the present disclosure, it is possible to further improve the welding strength between the welding target materials while preventing the increase in the welding width and the occurrence of the welding defects. In addition, by integrating the shank, the first spiral portion, the second spiral portion, and the heat receiving portion, a cost of the friction stir welding tool can be reduced by omitting a movable portion and reducing the number of components.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view showing a friction stir welding tool of the present disclosure;
Fig. 2 is an enlarged view showing a main part of the friction stir welding tool of the present disclosure;

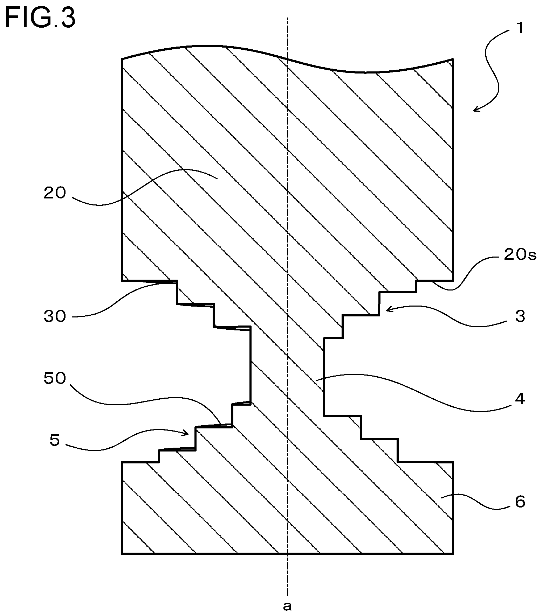

Fig. 3 is a cross-sectional view taken along a line III-III in Fig. 2;
Fig. 4 is a diagram showing an example of a mode of use of the friction stir welding tool of the present disclosure;
Fig. 5 is a diagram showing another example of the mode of use of the friction stir welding tool of the present disclosure;
Fig. 6 is a table showing temperatures of a shank, a non-spiral portion, and a heat receiving portion of the friction stir welding tool of the present disclosure that are measured immediately after friction stir welding; and
Fig. 7 is an enlarged view showing a main part of another friction stir welding tool of the present disclosure.

### DETAILED DESCRIPTION

Hereinafter, an embodiment of the present disclosure will be described with reference to the drawings.

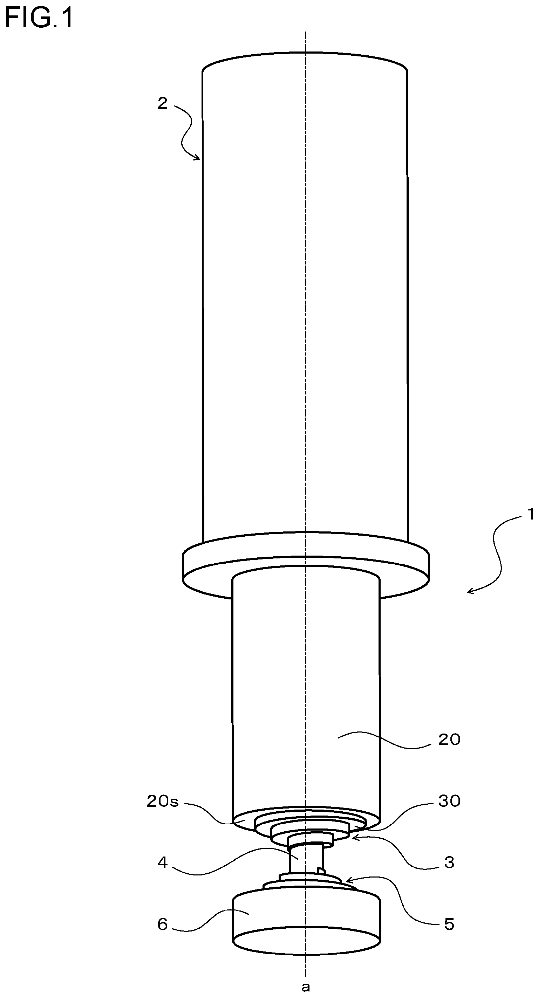

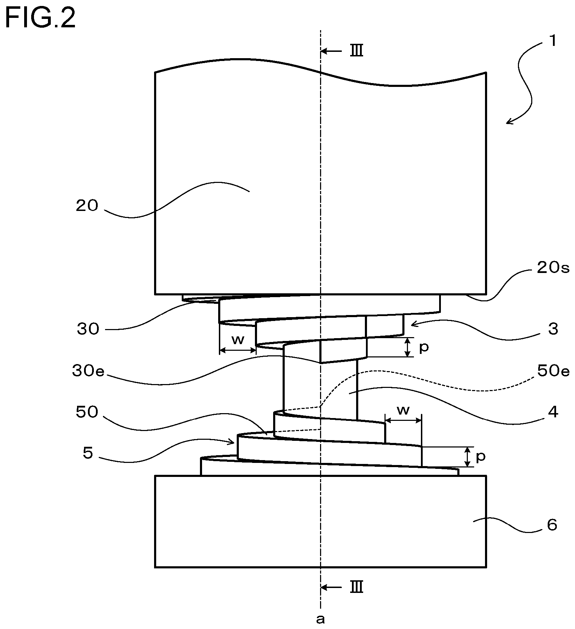

Fig. 1 is a perspective view showing a friction stir welding tool 1 of the present disclosure, and Fig. 2 is an enlarged view showing a main part of the friction stir welding tool 1. The friction stir welding tool 1 shown in these drawings is mounted on a rotating member such as a main shaft of a machine tool (not shown), and is rotationally driven by the main shaft so as to weld a pair of welding target materials abutting on each other or overlapping each other by friction stir welding. As shown in Figs. 1 and 2, the friction stir welding tool 1 includes a shank 2, a first spiral portion 3, a non-spiral portion 4, a second spiral portion 5, and a heat receiving portion 6, which are integrally formed. That is, the shank 2, the first spiral portion 3, the non-spiral portion 4, the second spiral portion 5, and the heat receiving portion 6 are formed by cutting a base material made of tool steel such as SKD61.

The shank 2 is a portion coaxially connected to the rotating member such as the main shaft of the machine tool. The first spiral portion 3 is integrated with a distal end portion (lower end portion in Fig. 1) 20 of the shank 2. The first spiral portion 3 is formed so as to be reduced in diameter (tapered) as being separated from an end surface 20s of the distal end portion 20 of the shank 2 in an axial direction, and has a first spiral surface 30. The first spiral surface 30 extends in a spiral shape (for example, right-handed winding) around an axis a extending coaxially with the rotating member (main shaft) so as to approach the axis a in a radial direction as being separated from the end surface 20s of the distal end portion 20 of the shank 2 in the axial direction. In the present embodiment, an inclination angle θ1 of the first spiral surface 30 with respect to a plane orthogonal to the axis a is determined to satisfy 0 < θ1 ≤ 45°. However, the inclination angle θ may be determined to satisfy 45° < θ1 < 90°.

The non-spiral portion 4 integrally extends from an end portion (a lower end portion in Fig. 2) of the first spiral portion 3 on a side opposite to a shank 2 side to the side opposite to the shank 2 side, that is, a lower side in Figs. 1 and 2, and is formed in a columnar shape in the present embodiment. An axial length (height) of the non-spiral portion 4 is determined to be smaller than a thickness of one of the welding target materials abutting on each other as a welding target or a total thickness of a pair of welding target materials overlapping each other. However, the non-spiral portion 4 is not necessarily formed in the columnar shape, and may include a chamfered portion. A spiral groove (screw groove) may be formed on an outer peripheral surface of the columnar non-spiral portion 4.

The second spiral portion 5 integrally extends from an end portion (a lower end portion in Fig. 2) of the non-spiral portion 4 on a side opposite to a first spiral portion 3 side to the side opposite to the first spiral portion 3 side, that is, the lower side in Figs. 1 and 2. That is, the non-spiral portion 4 forms a boundary portion between the first and second spiral portions 3, 5. The second spiral portion 5 is formed so as to be increased in diameter as being separated from the non-spiral portion 4 (first spiral portion 3) to the side opposite to the shank 2 side in the axial direction, and has a second spiral surface 50. The second spiral surface 50 extends in a spiral shape in a direction opposite to the first spiral surface 30 (for example, left-handed winding) around the axis a extending coaxially with the rotating member (main shaft) so as to be separated from the axis a in the radial direction as being separated from the non-spiral portion 4 (first spiral portion 3) to the side opposite to the shank 2 side in the axial direction. In the present embodiment, an inclination angle θ2 of the second spiral surface 50 with respect to the plane orthogonal to the axis a is determined such that an absolute value is equal to the inclination angle θ1 of the first spiral surface 30 and -45° ≤ θ2 < 0 is satisfied. However, the inclination angle θ2 may be determined to satisfy -90° < θ2 < 45°. As can be seen from Fig. 2, an end portion 30e of the first spiral surface 30 on a non-spiral portion 4 side and an end portion 50e of the second spiral surface 50 on the non-spiral portion 4 side are disposed to be shifted by 180°.

Further, in the friction stir welding tool 1, the first spiral surface 30 and the second spiral surface 50 have the same spiral width w and spiral pitch p. However, the spiral width w and the spiral pitch p of the first and second spiral surfaces 30, 50 are not necessarily constant as long as the spiral width w and the spiral pitch p are the same between the first and second spiral surfaces 30, 50 in a range from the end portion 30e to the end portion on a side opposite to the non-spiral portion 4 side (end surface 20s side) and a range from the end portion 50e to the end portion on the side opposite to the non-spiral portion 4 side (heat receiving portion 6 side), and may be determined to change in an extending direction of the first and second spiral surfaces 30, 50.

The heat receiving portion 6 integrally extends from the second spiral portion 5 to the side opposite to the non-spiral portion 4 (first spiral portion 3) side, that is, the lower side in Figs. 1 and 2, and receives heat from the non-spiral portion 4 via the second spiral portion 5. In the present embodiment, the heat receiving portion 6 is formed in a columnar shape. However, the heat receiving portion 6 is not necessarily formed in the columnar shape, and may be formed in any shape. The heat receiving portion 6 has a volume at least larger than a volume of the second spiral portion 5. The volume of the heat receiving portion 6 may be as large as possible within a range that does not hinder processing using the friction stir welding tool 1. Further, in the present embodiment, surface roughness of an outer peripheral surface and an end surface (lower surface in Fig. 2 and the like) of the heat receiving portion 6 is larger than surface roughness of the first and second spiral surfaces 30, 50 and the non-spiral portion 4.

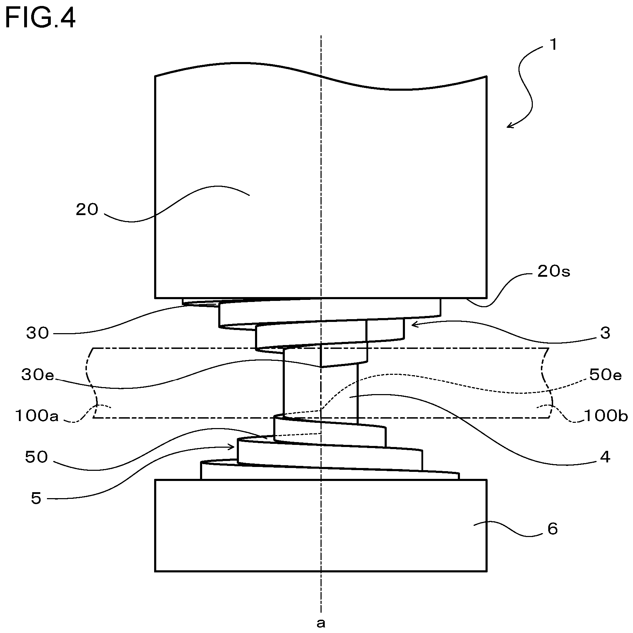

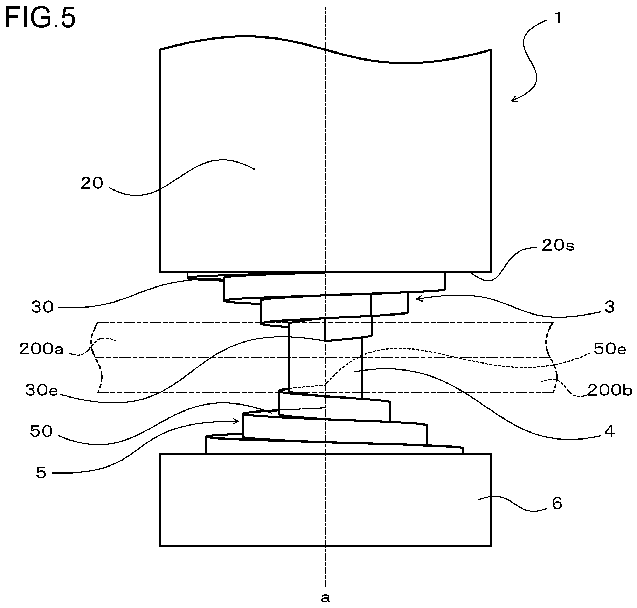

As shown in Fig. 4, when a pair of welding target materials (for example, metal materials) 100a and 100b abutting on each other are welded by the friction stir welding tool 1, the welding target materials 100a and 100b are positioned with respect to the friction stir welding tool 1 such that abutting surfaces of the welding target materials 100a and 100b face the axis a and a center of the welding target materials 100a and 100b in a thickness direction and a center of the non-spiral portion 4 in the axial direction are included in the same plane. In addition, as shown in Fig. 5, when a pair of welding target materials (metal materials) 200a and 200b overlapping each other are welded by the friction stir welding tool 1, the welding target materials 200a and 200b are positioned with respect to the friction stir welding tool 1 such that welding target portions of the welding target materials 200a and 200b face the axis a and abutting surfaces of the welding target materials 200a and 200b and the center of the non-spiral portion 4 in the axial direction are included in the same plane. When the welding target materials 100a and 100b or the welding target materials 200a and 200b are positioned with respect to the friction stir welding tool 1, the friction stir welding tool 1 is rotationally driven around the axis a by the machine tool, and the non-spiral portion 4 is moved so as to pass through the pair of welding target materials 100a and 100b or 200a and 200b abutting on each other or overlapping each other and travel in one direction (for example, the back side of the paper in Figs. 4 and 5).

Accordingly, a surrounding material is frictionally stirred by the rotating non-spiral portion 4 and portions of the first and second spiral portions 3, 5 adjacent to the non-spiral portion 4, and a plasticized region is formed on a rear side in a traveling direction of the non-spiral portion 4. In addition, the first and second spiral surfaces 30, 50 are formed so as to respectively approach the axis a and extend in opposite directions toward the non-spiral portion 4, and cause a plastic flow of the material in a rotation direction of the friction stir welding tool 1 to reduce a ratio of the plastic flow of the material in an extending direction of the axis a. Therefore, it is possible to firmly weld the welding target materials 100a and 100b or 200a and 200b to each other from a front surface side and a back surface side while preventing an increase in welding width and generation of burrs due to the friction stir welding.

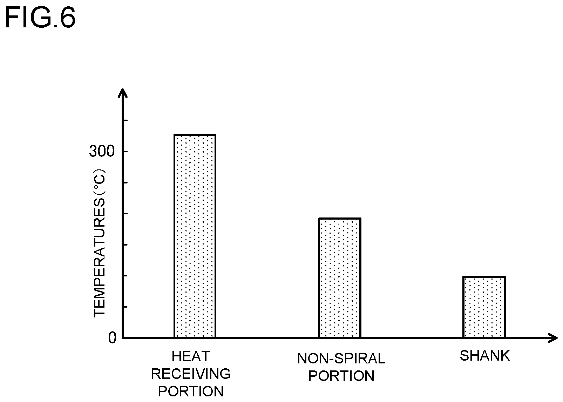

Further, heat generated in the non-spiral portion 4 and the first and second spiral portions 3, 5 adjacent thereto by friction stirring of the material is mainly transferred to the heat receiving portion 6 via the second spiral portion 5. Accordingly, the expansion of the non-spiral portion 4 due to frictional heat can be prevented, and an occurrence of welding defects due to a fluctuation of an interval between the first spiral surface 30 and the second spiral surface 50 in the axial direction can be favorably prevented. Fig. 6 shows temperatures of the shank 2, the non-spiral portion 4, and the heat receiving portion 6 of the friction stir welding tool 1 that are measured immediately after friction stir welding. As shown in Fig. 6, immediately after the friction stir welding, the temperature of the heat receiving portion 6 becomes higher than the temperatures of the non-spiral portion 4 and the shank 2. From these measurement results, it can be understood that the frictional heat generated in the non-spiral portion 4 is transferred to the heat receiving portion 6 via the second spiral portion 5, and thus thermal expansion of the non-spiral portion 4 can be favorably prevented. As a result, according to the friction stir welding tool 1, it is possible to further improve welding strength between the welding target materials 100a and 100b or 200a and 200b while preventing the increase in the welding width and the occurrence of the welding defects. In addition, by integrating the shank 2, the first spiral portion 3, the non-spiral portion 4, the second spiral portion 5, and the heat receiving portion 6, a cost of the friction stir welding tool 1 can be reduced by omitting a movable portion for moving a pair of upper and lower shoulders closer and separated from each other and reducing the number of components.

Further, the friction stir welding tool 1 includes the non-spiral portion 4 integrally extending from the end portion of the first spiral portion 3 on the side opposite to the shank 2 side, and the second spiral portion 5 integrally extends from the end portion of the non-spiral portion 4 on the side opposite to the first spiral portion 3 side. As described above, by forming the non-spiral portion 4 not including the first and second spiral surfaces 30, 50 between the first and second spiral portions 3, 5, it is possible to prevent the material from being excessively stirred in the vicinity of the center in the thickness direction of the pair of welding target materials 100a and 100b abutting on each other or in the vicinity of the welding target portions of the pair of welding target materials 200a and 200b overlapping each other, and to prevent the occurrence of defects due to excessive stirring. In addition, by adjusting the axial length of the non-spiral portion 4 (columnar portion) according to a welding target, a stirring amount of the material around the non-spiral portion 4 can be optimized.

Further, in the friction stir welding tool 1, the volume of the heat receiving portion 6 is set to be at least larger than the volume of the second spiral portion 5. Accordingly, the heat from the non-spiral portion 4 is transferred to the heat receiving portion 6 without being accumulated in the second spiral portion 5, and it is possible to favorably prevent a temperature rise of the non-spiral portion 4 during the friction stir welding.

In addition, in the friction stir welding tool 1, the end portion 30e of the first spiral surface 30 on the non-spiral portion 4 side and the end portion 50e of the second spiral surface 50 on the non-spiral portion 4 side are disposed to be shifted by 180°. Accordingly, the first and second spiral surfaces 30, 50 can press both of the pair of welding target materials 100a and 100b or 200a and 200b abutting on each other or overlapping each other in the traveling direction of the non-spiral portion 4, and the friction stir welding tool 1 traveling in one direction can be favorably prevented from rattling due to a reaction force from the pair of welding target materials 100a and 100b or 200a and 200b. As a result, the generation of the frictional heat due to rattling of the friction stir welding tool 1 can be prevented, and the temperature rise of the non-spiral portion 4 during the friction stir welding can be extremely favorably prevented.

Further, in the friction stir welding tool 1, the surface roughness of the outer peripheral surface and the end surface of the heat receiving portion 6 is larger than the surface roughness of the first and second spiral surfaces 30, 50 and the non-spiral portion 4. Accordingly, it is possible to simplify surface treatment of the heat receiving portion 6 which is not directly involved in the friction stir welding, that is, processing by the non-spiral portion 4 or the like, and to further reduce the cost of the friction stir welding tool 1. However, the surface roughness of the heat receiving portion 6 may be approximately the same as the surface roughness of the first and second spiral surfaces 30, 50 and the non-spiral portion 4.

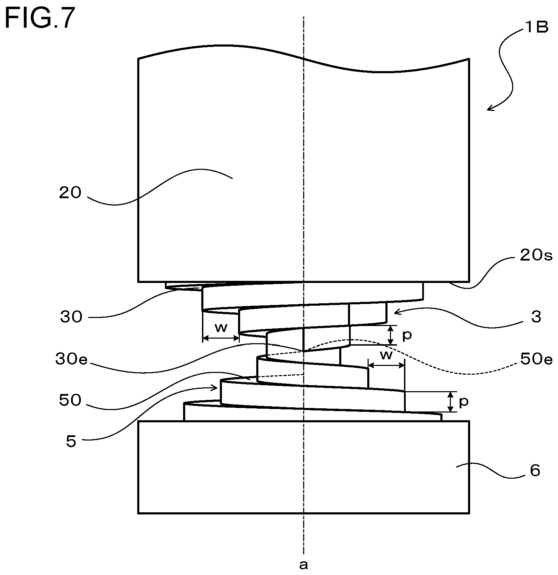

Fig. 7 is an enlarged view showing a main part of another friction stir welding tool 1B of the present disclosure. Among the components of the friction stir welding tool 1B, the same components as those of the above-described friction stir welding tool 1 are denoted by the same reference numerals, and redundant description thereof will be omitted.

As shown in Fig. 7, the friction stir welding tool 1B includes the shank 2, the first spiral portion 3, the second spiral portion 5, and the heat receiving portion 6 which are integrally formed, and corresponds to the friction stir welding tool 1 described above from which the non-spiral portion 4 is omitted. That is, in the friction stir welding tool 1B, the second spiral portion 5 integrally extends from the end portion of the first spiral portion 3 on the side opposite to the shank 2 side to the side opposite to the shank 2 side. In addition, also in the friction stir welding tool 1B, the end portion 30e of the first spiral surface 30 on the second spiral portion 5 side and the end portion 50e of the second spiral surface 50 on the first spiral portion 3 side are disposed to be shifted by 180°.

When welding a pair of welding target materials abutting on each other by the friction stir welding tool 1B, the pair of welding target materials are positioned with respect to the friction stir welding tool 1B such that abutting surfaces of both welding target materials face the axis a and a center of the pair of welding target materials in the thickness direction and the boundary portion (boundary surface) between the first and second spiral portions 3, 5 are included in the same plane. Further, when the pair of welding target materials overlapping each other are welded by the friction stir welding tool 1B, the pair of welding target materials are positioned with respect to the friction stir welding tool 1B such that welding target portions of both welding target materials face the axis a and the abutting surfaces of the pair of welding target materials and the boundary portion between the first and second spiral portions 3, 5 are included in the same plane. When the pair of welding target materials are positioned with respect to the friction stir welding tool 1B, the friction stir welding tool 1B is rotationally driven around the axis a by the machine tool, and the boundary portion between the first and second spiral portions 3, 5 is moved to pass through the pair of welding target materials abutting on each other or overlapping each other and travel in one direction.

Accordingly, a surrounding material is frictionally stirred by portions adjacent to the boundary portion between the rotating first and second spiral portions 3, 5, and a plasticized region is formed on a rear side in the traveling direction of the first and second spiral portions 3, 5. In addition, the first and second spiral surfaces 30, 50 are formed so as to respectively approach the axis a and extend in opposite directions toward the boundary portion between the first and second spiral portions 3, 5, and cause a plastic flow of the material in the rotation direction of the friction stir welding tool 1B to reduce the ratio of the plastic flow of the material in the extending direction of the axis a. Therefore, also by the friction stir welding tool 1B, it is possible to firmly weld the welding target materials to each other from the front surface side and the back surface side while preventing the increase in the welding width and the generation of the burrs due to the friction stir welding.

Further, the heat generated in the first and second spiral portions 3, 5 by the friction stirring of the material is mainly transferred to the heat receiving portion 6 from the second spiral portion 5. Accordingly, the expansion in the vicinity of the boundary portion between the first and second spiral portions 3, 5 due to the frictional heat can be prevented, and the occurrence of the welding defects due to the fluctuation of the interval between the first spiral surface 30 and the second spiral surface 50 in the axial direction can be favorably prevented. As a result, also according to the friction stir welding tool 1B, it is possible to further improve the welding strength between the welding target materials while preventing the increase in welding width and the occurrence of the welding defects. In addition, by integrating the shank 2, the first spiral portion 3, the second spiral portion 5, and the heat receiving portion 6, a cost of the friction stir welding tool 1B can be reduced by omitting a movable portion for moving a pair of upper and lower shoulders closer and separated from each other and reducing the number of components. Further, by directly extending the second spiral portion 5 from the first spiral portion 3 without providing the non-spiral portion 4, a stirring force of the material by the portions adjacent to the boundary portion between the first and second spiral portions 3, 5 can be further improved. In the friction stir welding tool 1B, the spiral pitch p on the boundary portion side of the first and second spiral portions 3, 5 of the first spiral surface 30 may be larger than that on the shank 2 side, and the spiral pitch p on the boundary portion side of the first and second spiral portions 3, 5 of the second spiral surface 50 may be larger than that on the heat receiving portion 6 side.

As described above, the friction stir welding tools 1, 1B of the present disclosure each include the shank 2, the first spiral portion 3, the second spiral portion 5, and the heat receiving portion 6 which are integrally formed. The shank 2 is coaxially connected to the rotating member such as the main shaft of the machine tool. The first spiral portion 3 is formed integrally with the shank 2, and has the first spiral surface 30 spirally extending around the axis a extending coaxially with the rotating member so as to approach the axis a as being separated from the shank 2 in the axial direction. The second spiral portion 5 is formed integrally with the first spiral portion 3, and has the second spiral surface 50 extending in the spiral shape in the direction opposite to the first spiral surface 30 so as to be separated from the axis a as being separated from the first spiral portion 3 toward the side opposite to the shank 2 side around the axis a. The heat receiving portion 6 integrally extends from the second spiral portion 5 to the side opposite to the first spiral portion 3 side, and receives the heat from the second spiral portion 5. According to the friction stir welding tools 1, 1B described above, it is possible to further improve the welding strength between the welding target materials 100a and 100b or 200a and 200b while preventing the increase in the welding width and the occurrence of the welding defects. In addition, by integrating the shank 2, the first spiral portion 3, the second spiral portion 5, and the heat receiving portion 6, the cost of the friction stir welding tools 1, 1B can be reduced by omitting the movable portion and reducing the number of components.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

### Industrial Applicability

The embodiment of the present disclosure can be used in a manufacturing industry or the like of a friction stir welding tool.

## Claims

1. A friction stir welding tool (1, 1B) that welds welding target materials to each other, the friction stir welding tool comprising:
a shank (2) coaxially connected to a rotating member;
a first spiral portion (3) integrally formed with the shank, and having a first spiral surface (30) extending in a spiral shape around an axis (a) extending coaxially with the rotating member so as to approach the axis as being separated from the shank in an axial direction;
a second spiral portion (5) integrally formed with the first spiral portion, and having a second spiral surface (50) extending in a spiral shape in a direction opposite to the first spiral surface around the axis so as to be separated from the axis as being separated from the first spiral portion in the axial direction on a side opposite to a shank side; and
a heat receiving portion (6) integrally extending from the second spiral portion on a side opposite to a first spiral portion side and configured to receive heat from the second spiral portion.

2. The friction stir welding tool according to claim 1, further comprising:
a non-spiral portion (4) integrally extending from an end portion (30e) of the first spiral portion on the side opposite to the shank side, wherein
the second spiral portion integrally extends from an end portion of the non-spiral portion on a side opposite to the first spiral portion side.

3. The friction stir welding tool according to claim 1 or 2, wherein
a volume of the heat receiving portion is at least larger than a volume of the second spiral portion.

4. The friction stir welding tool according to claim 1 or 2, wherein
an end portion of the first spiral surface on a second spiral portion side and an end portion (50e) of the second spiral surface on the first spiral portion side are disposed so as to be shifted by 180°.
